# EUROPEAN PATENT APPLICATION

(11) **EP 2 738 518 A2**
(43) Date of publication of application: **04.06.2014**
(21) Application number: 13194713.7
(22) Date of filing: 27.11.2013
(51) Int. Cl.: G01C 21/16

(54) **Inertia sensor and method for reducing operation error of the same**

(30) Priority: 29.11.2012 JP 2012261558
(71) Applicant: Tamagawa Seiki Co., Ltd., Iida-shi, Nagano 395-8515 (JP)
(72) Inventor: Ohta, Kazuhiro, Iida-shi, Nagano 395-8515 (JP); Yachi, Masanori, Iida-shi, Nagano 395-8515 (JP)
(74) Representative: Jenkins, Peter David

(57) **Abstract**

To provide an inertia sensor and a method for reducing an operation error of the inertia sensor, the sensor and the method being configured such that complicated means is not required, and such that, even at the initial use stage in which the temperature characteristic of the sensor is not learned, and even in the case where the sensor is used in an ambient temperature different from the ambient temperature during the previous use of the sensor, an operation error due to an output change caused by a temperature change can be reduced in a relatively simple and highly accurate manner. An inertia sensor 10 is configured by including at least a sensor element 1 for sensing inertia, a signal processing circuit 2, and a memory 3, and is configured such that memory data 8 for estimating a characteristic of the inertia sensor 10 is stored in the memory 3. An angular velocity sensor and an acceleration sensor are included in the category of the inertia sensor 10.

## Description

### BACKGROUND OF THE INVENTION

### Field of the Invention

The present invention relates to an inertia sensor and a method for reducing an operation error of the inertia sensor. More particularly, the present invention relates to an inertia sensor (an angular velocity sensor, an acceleration sensor) and a method for reducing an operation error of the inertia sensor, the sensor and the method being capable of reducing, in a relatively simple and highly accurate manner, an operation error due to an output change caused by a temperature change in a system which uses the inertia sensor and is used for car navigation, posture control of an automobile and a robot, hand-shake correction of a camera, and the like.

### Description of the Related Art

In a system which uses an inertia sensor (an angular velocity sensor, an acceleration sensor), and which is used for car navigation, posture control of an automobile and a robot, hand-shake correction of a camera, and the like, it is required that an operation error due to an output change caused, particularly, by a temperature change in the system is reduced as small as possible. Conventionally, the operation error has been suppressed to some extent by using a sensor which has a temperature characteristic within a certain range. However, each of the sensors has a temperature characteristic, and the temperature characteristic is different for each of the sensors. Therefore, it is difficult to completely suppress the operation error. To cope with this, conventionally, a method has often been adopted in which a learning function is given to the side of a system using a sensor, and in which the system learns a temperature characteristic of the sensor from temperature data and sensor data during the use of the sensor, so as to reduce the operation error on the basis of the temperature characteristic.

Note that a plurality of proposals have been conventionally made about a data correction technique for an inertia sensor. Among the proposals, Japanese Patent Laid-Open No. 2006-308448 entitled "Correction Value Memory Unit and Correction Apparatus" discloses, as a correction value memory unit for improving the correction value accuracy, a configuration in which a terminal for connecting a battery to two sensors of a temperature sensor and a gyro-sensor without via an ignition switch is provided between the battery and the two sensors of the temperature sensor and the gyro-sensor, in which the temperature sensor and the gyro-sensor can be connected to the battery by one of two circuits, one passing through the terminal and the other passing through the another terminal connected to the ignition switch, in which a switch for changing over whether the temperature sensor and the gyro-sensor are connected to the terminal or the another terminal is provided between the temperature sensor and the gyro-sensor, and the terminal and the another terminal, and in which a switch control circuit for making the switch change over the connection of the sensors to one of the terminals according to an instruction from a CPU is connected to an output IF.

Further, as a physical quantity sensor which can perform sensitivity and drift correction in a wide range even when a circuit with relatively low precision is used as correction signal generation means, Japanese Patent Laid-Open No. 2006-090706 entitled "Physical Quantity Sensor" (Japanese Patent No. 4559805) discloses a configuration which includes variable gain amplification means that performs sensitivity correction of the physical quantity sensor by adjusting an amplification rate thereof with respect to an output signal of detection means, and correction signal adjustment means that performs level adjustment of the output of the correction signal generation means according to the amplification rate of the variable gain amplification means, and in which a signal obtained by adding the output signal of the correction signal adjustment means to the output signal of the detection means is amplified by the variable gain amplification means. Japanese Patent Laid-Open No. 2006-090706 describes that, with this configuration, the resolution of the zero-point drift correction of the output can be made constant without depending on the amplification rate of the variable gain amplification means.

Japanese Patent Laid-Open No. 2010-224166 entitled "Digital Camera and Exchangeable Lens" discloses a technique which aims to eliminate the effect of misalignment of a lens of a digital camera due to mechanical play caused at the time of driving the lens, and in which the digital camera is provided with a misalignment amount recording memory for recording the amount of misalignment due to mechanical play caused in a focus lens at the time of driving the focus lens, and corrects an image shift caused at the time of driving the focus lens, on the basis of the amount of misalignment stored in the misalignment amount recording memory. However, the technique is related to correction of the mechanical play.

### SUMMARY OF THE INVENTION

As described above, when a learning function is given to the side of a system using an inertia sensor, and when the temperature characteristic of the inertia sensor is thereby learned by the system side, the operation error due to a sensor output change caused by a temperature change in the system is reduced as the sensor is repeatedly used and each time the sensor is used. However, at the initial use stage in which the temperature characteristic of the sensor is not learned by the system side, and in the case where the sensor is used in an ambient temperature different from the ambient temperature during the previous use of the sensor, the operation error is caused, and it takes considerable time until the operation error is reduced.

Therefore, an object of the present invention is to provide an inertia sensor and a method for reducing an operation error of the inertia sensor, in which complicated means, such as the techniques disclosed in the above-described patent literatures, are not required, and in which, even in such cases as the initial use stage in which the temperature characteristic of the sensor is not learned by the side of a system using the sensor, and the case where the sensor is used in an ambient temperature different from the ambient temperature during the previous use of the sensor, the operation error due to a sensor output change caused by a temperature change in the system can be reduced in a relatively simple and highly accurate manner.

As a result of an extensive investigation of the above-described problems, the present inventors came up with an idea that the problems can be solved in such a manner that information on a temperature characteristic of a sensor is stored in a memory in the sensor, and that the system side reads beforehand the information by using digital communication, so as to perform correction based on the information. On the basis of this idea, the present inventors came to complete the present invention. That is, the invention as claimed in the present application as means for solving the above-described problems, or at least the invention disclosed in the present application is as follows.
[1] An inertia sensor configured by including at least a sensor element for sensing inertia, a signal processing circuit, and a memory, in which memory data for estimating a characteristic of the inertia sensor is stored in the memory.
[2] An inertia sensor configured by a sensor element for sensing inertia, and an LSI configured by including at least a signal processing circuit and a memory, in which memory data for estimating a characteristic of the inertia sensor is stored in the memory.
[3] The inertia sensor as described in one of [1] and [2], in which an operation error due to a sensor output change caused by a use environment change of the sensor is reduced on the basis of the memory data.
[4] The inertia sensor as described in one of [1] to [3], in which a temperature sensor is included in the configuration of the inertia sensor, and the memory data is data about the temperature characteristic of the inertia sensor, the data being obtained on the basis of an output of the temperature sensor.
[5] The inertia sensor as described in [4], in which the memory data represents coefficients of a straight line or a curve of quadratic or higher order polynomial based on sensor output data including definition range data and value range data.
[6] The inertia sensor as described in [5], in which the memory data represents a plurality of pieces of temperature data and sensor output data.

[7] The inertia sensor as described in one of [4] to [6], in which the memory data is data acquired at the time of manufacture of the inertia sensor.
[8] The inertia sensor as described in one of [4] to [7], in which the memory data is subjected to temperature correction.
[9] The inertia sensor as described in [8], in which the temperature correction is expressed as a straight line or a curve of quadratic or higher order polynomial.
[10] The inertia sensor as described in one of [4] to [7], in which the memory data is not subjected to temperature correction.
[11] The inertia sensor as described in one of [1] to [10], the inertia sensor being an angular velocity sensor.
[12] The inertia sensor as described in one of [1] to [10], the inertia sensor being an acceleration sensor.
[13] A method for reducing an operation error of an inertia sensor, in which a system using the inertia sensor as described in one of [4] to [12] estimates a characteristic of the inertia sensor by reading the memory data from the inertia sensor, and reduces, on the basis of the estimated characteristic, an operation error due to a sensor output change caused by a use environment change.

The inertia sensor and the method for reducing the operation error of the inertia sensor, according to the present invention, are configured as described above. Therefore, in the inertia sensor and the method for reducing the operation error of the inertia sensor, complicated means, such as the conventional techniques, is not required. Further, even at the initial use stage in which the temperature characteristic of the sensor is not learned, and even in the case where the sensor is used in an ambient temperature different from the ambient temperature during the previous use of the sensor, the operation error due to a sensor output change caused by an ambient temperature change can be reduced in a relatively simple and highly accurate manner.

That is, with the present invention, the temperature characteristic of the sensor can be estimated from the memory data easily and highly precisely. Therefore, from the beginning of the use of the sensor, a highly precise operation with less operation error due to a temperature change can be performed without requiring that the temperature characteristic of the sensor be learned by the learning function of the system side. Therefore, the present invention can provide a high performance inertia sensor as an inertia sensor (an angular velocity sensor, an acceleration sensor) used for car navigation, posture control of an automobile and a robot, hand-shake correction of a camera, and the like.

### BRIEF DESCRIPTION OF THE DRAWINGS

FIG. 1 is a conceptual diagram showing a fundamental configuration of an inertia sensor of the present invention;
FIG. 2 is a conceptual diagram showing another fundamental configuration of an inertia sensor of the present invention;
FIG. 3 is a flow diagram showing a configuration of a method for reducing an operation error of the inertia sensor of the present invention;
FIG. 4 is an illustration showing a configuration example of an angular velocity sensor as an example of the present invention;
FIG. 5 is an illustration showing an example of a circuit configuration of an LSI according to the inertia sensor of the present invention;
FIG. 6 is a graph showing a temperature characteristic (angular velocity conversion value) of static-state output of the angular velocity sensor as an example of the present invention;
FIG. 7 is a graph showing an example of data stored in the memory of the LSI in the example of the present invention;
FIG. 8(A) is a graph showing an example of a relationship between the sensor temperature change and the error in the case where the sensor characteristic is not estimated in the example of the present invention; and
FIG. 8(B) is a graph showing an example of a relationship between the sensor temperature change and the error in the case where the sensor characteristic is estimated from the memory data in the LSI in the example of the present invention.

### DETAILED DESCRIPTION OF THE PREFERRED EMBODIMENT

In the following, the present invention will be described in detail with reference to the accompanying drawings.

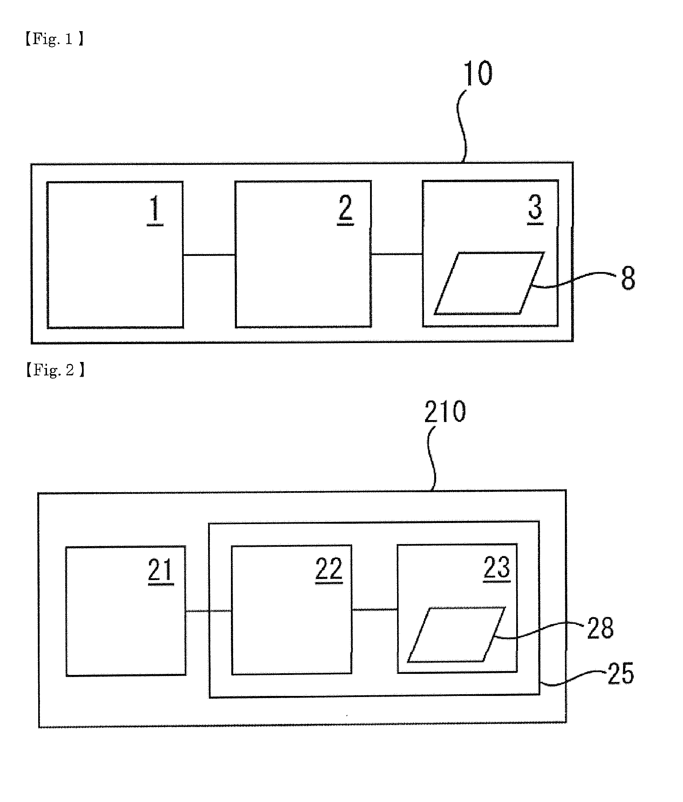

FIG. 1 is a conceptual diagram showing a fundamental configuration of an inertia sensor of the present invention. As shown in FIG. 1, an inertia sensor 10 includes at least a sensor element 1 for sensing inertia, a signal processing circuit 2, and a memory 3, and is mainly configured such that memory data 8 for estimating the characteristic of the inertia sensor 10 is stored in the memory 3. Note that an angular velocity sensor and an acceleration sensor are also included in the category of the inertia sensor 10.

FIG. 2 is a conceptual diagram showing another fundamental configuration of an inertia sensor of the present invention. As shown in FIG. 2, an inertia sensor 210 includes a sensor element 21 for sensing inertia, and an LSI 25 configured by including at least a signal processing circuit 22 and a memory 23, and is also configured such that memory data 28 for estimating the characteristic of the inertia sensor 210 is stored in the memory 23. That is, the inertia sensor of the present invention is configured regardless of whether or not the inertia sensor has a form in which the signal processing circuit and the memory are incorporated in an LSI. Note that a composite device in which the sensor element 21 and the LSI 25 shown in FIG. 2 are configured as separate bodies, and a configuration as a system LSI formed by incorporating the sensor element 21 and the LSI 25 in one chip, are also not excluded from the present invention, and are included in the present invention described with reference to FIG. 1. Note that the following description is made mainly in relation to the configuration shown in FIG. 2.

With the inertia sensor 210 configured as described above, it is possible to obtain an effect that an operation error due to a sensor output change caused by a change in the use environment of the sensor is reduced on the basis of the memory data 28. Specifically, the memory data 28 is generated on the basis of source data used as a source of the memory data 28, and operation processing of the sensor output is performed on the basis of the memory data 28, so that an estimated value of the sensor characteristic of the inertia sensor 210 is obtained. Thereby, the operation error due to the sensor output change is reduced.

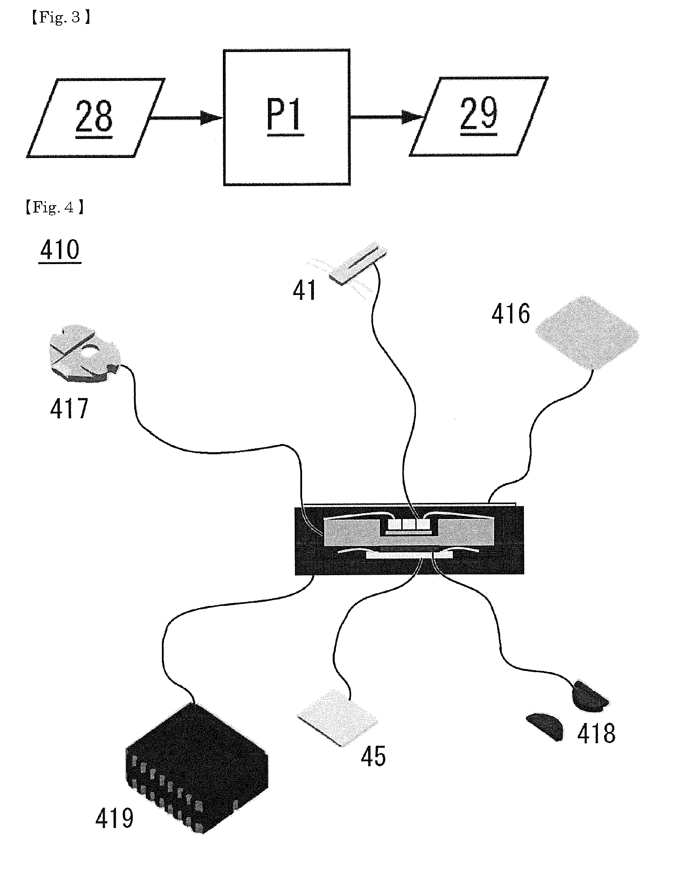

FIG. 3 is a flow diagram showing a configuration of a method for reducing the operation error of the inertia sensor of the present invention. As shown in FIG. 3, in the inertia sensor described above, the system using the inertia sensor estimates the characteristic of the inertia sensor by reading the memory data 28 from the inertia sensor (estimation value generation process P1), and reduces the operation error due to a sensor output change caused by a use environment change, on the basis of a generated estimated value 29. Note that the memory data 28 can be formed of, for example, coefficients expressing a straight line or a curve of quadratic or higher order polynomial based on a data group (sensor output data including definition range data and value range data).

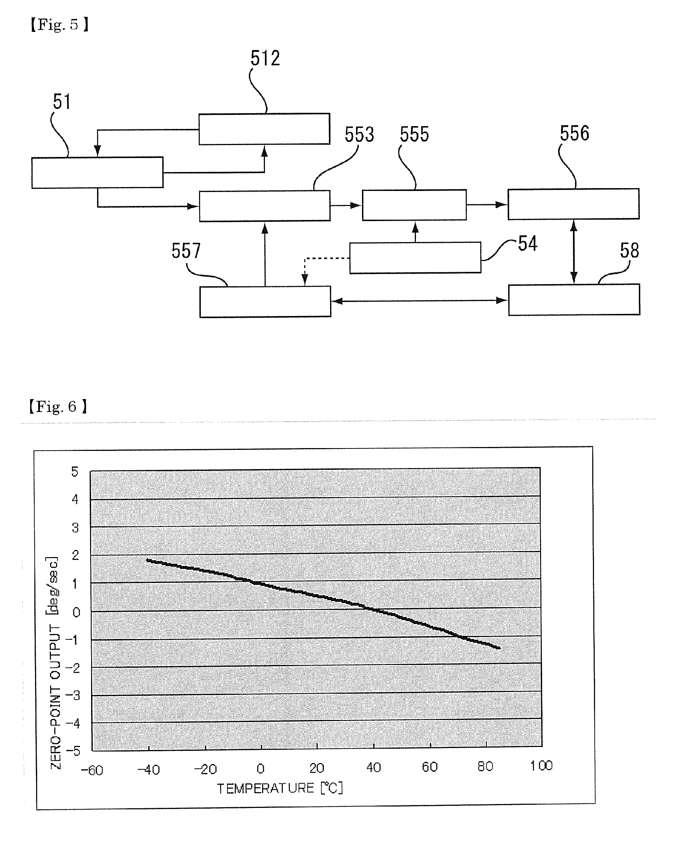

FIG. 4 is an illustration showing a configuration example of an angular velocity sensor as an example of the present invention. Further, FIG. 5 is an illustration showing an example of a circuit configuration of an LSI according to the inertia sensor of the present invention. As shown in FIG. 5, the inertia sensor is configured to include a temperature sensor 54, and can use, as the memory data 28, the data about the temperature characteristic of the inertia sensor.

In the inertia sensor 210 of the present invention shown in FIG. 2, the memory data 28 can be configured by including at least one of a data group (temperature data, sensor output data) about the temperature data, and an inclination amount data based on a plurality of data groups (temperature data, sensor output data). As will be described in an example below, the present invention can be implemented by using at least zero or more of the data groups about the temperature data and one or more of the inclination amount data.

Note that the data acquired at the time of manufacture of the inertia sensor can be used as it is as the memory data. Further, the memory data may be temperature-corrected or may not be temperature-corrected. In the case where the memory data is temperature-corrected, the memory data can be temperature-corrected by the LSI 25 or a peripheral component of the LSI. Further, a straight line or a curve of quadratic or higher order polynomial can be preferably used for the temperature correction.

### [Example]

In the following, the present invention will be described with reference to an example, but the present invention is not limited to the example.

The inertia sensor (angular velocity sensor) as shown in FIG. 4 was manufactured. An angular velocity sensor 410 of this example is configured by a sensor element 41 for detecting angular velocity, an LSI 45 for oscillating the sensor element 41 and for processing an angular velocity signal outputted from the sensor element 41, a package 419 for mounting therein the sensor element 41 and the LSI 45, and the like.

Further, the LSI of the inertia sensor of this example can have a circuit configuration such as, for example, the circuit configuration example shown in FIG. 5. That is, the LSI is configured by an oscillation circuit 512 for oscillating a sensor element 51, a detection circuit 553 for processing an angular velocity signal outputted from the sensor element 51, an adjustment circuit 557 for adjusting an output of the detection circuit 553 to a predetermined value, a memory 58 for storing the amount of adjustment, and the like, performed in the adjustment circuit 557, an ADC circuit 555 for converting, into digital data, the outputs (analog outputs) of the temperature sensor 54 and the detection circuit 553, a serial IF circuit 556 for outputting an output of the ADC circuit 555 to the outside and for writing and reading data to and from the memory 58, and the like.

FIG. 6 is a graph showing a temperature characteristic (angular velocity conversion value) of static-state output of the angular velocity sensor in this example. This characteristic is acquired at the time of manufacture of the angular velocity sensor. Note that the characteristic may be subjected to temperature correction based on a straight line or a curve of second or higher order polynomial by using a circuit, such as the adjustment circuit in the LSI, and an external circuit such as, for example, a circuit using a temperature elements such as a thermistor, or may not be subjected to temperature correction.

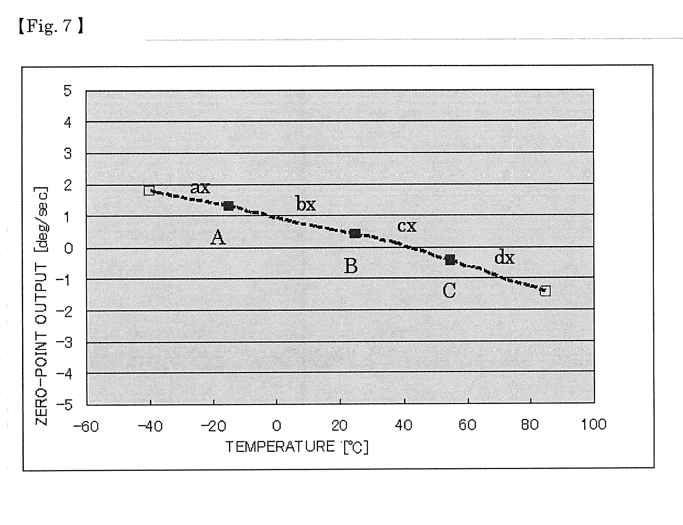

FIG. 7 is a graph showing an example of data stored in the memory in the LSI of this example. From the measured data, for example, temperature data of A, B and C, a sensor inclination amount a in the range of the temperature A or less, a sensor inclination amount b between the temperatures A and B, a sensor inclination amounts c between the temperatures B and C, and a sensor inclination amount d in the range of the temperature C or more are set as the data to be stored in the memory. From the acquired characteristic data, each of the temperatures A, B and C, and each of the inclination amount data a, b, c and d are arbitrarily set so as to make the error as small as possible. The temperature characteristic of the sensor can be estimated from these data. Note that it is only necessary that the temperature characteristic of the sensor, which is to be stored in the memory, can be estimated. Therefore, it is only necessary to use zero or more temperature data and one or more inclination amounts. Further, the temperature characteristic of the sensor may be subjected to temperature correction based on a curve of second or higher order polynomial. For example, when the temperature characteristic of the sensor is subjected to temperature correction based on a quartic curve, the contents of coefficients a, b, c and d of a quartic expression of a x⁴ + b x³ + c x² + d x may be stored.

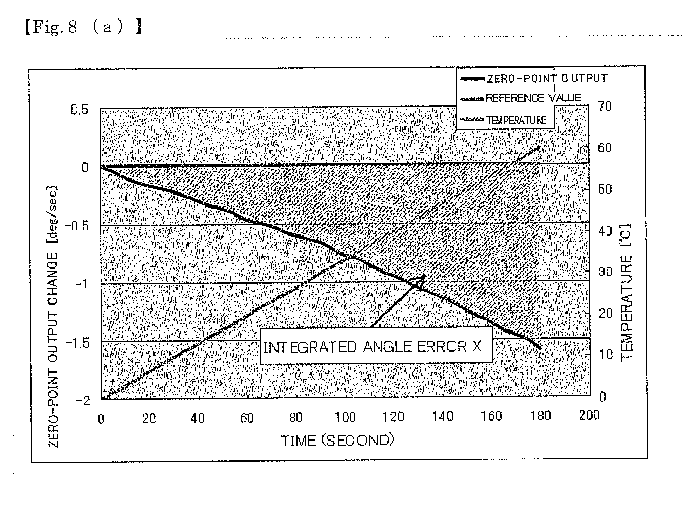

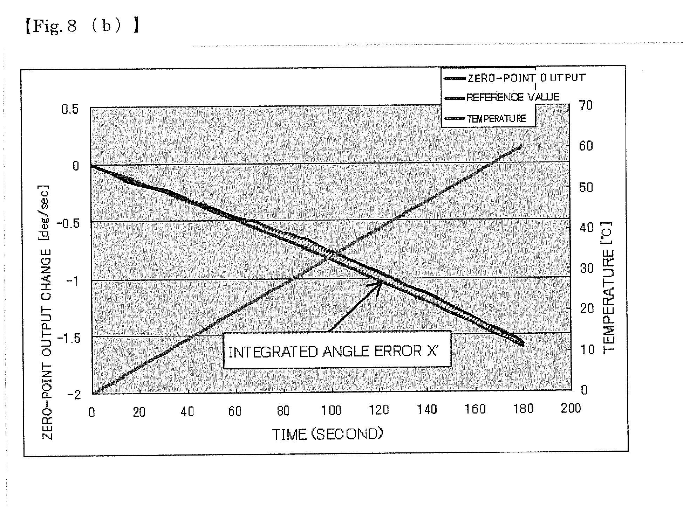

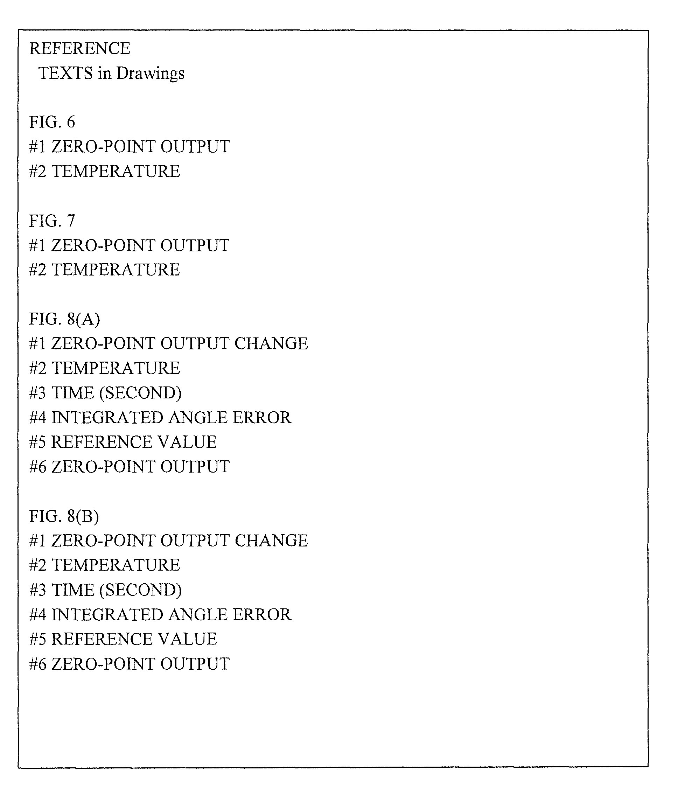

FIG. 8(A) is a graph showing an example of a relationship between the sensor temperature change and the error in the case where the sensor characteristic is not estimated in the example of the present invention. FIG. 8(B) is a graph showing an example of a relationship between the sensor temperature change and the error in the case where the sensor characteristic is estimated from the data in the memory in the LSI in the example of the present invention. As for the error, for example, when the temperature changes from 0 degree to 60 degrees during the use of the sensor, an integrated angle error is obtained as the error by integrating, over the time period of the temperature change, the area X between the line of the reference value and the curve of the sensor characteristic in the range of the temperature change from 0 degree to 60 degrees.

In the case of the example of FIG. 8(A) in which the sensor characteristic is not estimated, the reference value is set to 0, and hence the error is significantly large. On the other hand, in the case of the example of FIG. 8(B) in which the sensor characteristic is estimated on the basis of the present invention, the sensor characteristic is estimated from the memory data, and the estimated characteristic is set as the reference. From FIG. 8(B), it can be seen that, in this case, the error X' is significantly smaller than the error X in the case of the example of FIG. 8(A).

### Industrial Applicability

An inertia sensor and a method for reducing an operation error of the inertia sensor, according to the present invention, are configured such that complicated means, such as the conventional techniques, is not required, and such that, even at the initial use stage in which the temperature characteristic of the sensor is not learned, and even in a case where the sensor is used in an ambient temperature different from the ambient temperature during the previous use of the sensor, an operation error due to a sensor output change caused by a temperature change can be reduced in a relatively simple and highly accurate manner. Therefore, the present invention can provide a high performance inertia sensor used for car navigation, posture control of an automobile and a robot, hand-shake correction of a camera, and the like. Therefore, the present invention is highly available in all the industrial fields in which the sensor manufacturing method and the acceleration sensor are used.

### Description of Symbols

- 1, 21, 41, 51: Sensor element
- 2, 22: Signal processing circuit
- 3, 23, 58: Memory
- 8, 28: Memory data
- 29: Estimated value
- 10, 210: Inertia sensor
- 25, 45: LSI
- 30: Estimated value of sensor characteristic
- 410: Angular velocity sensor
- 416: Top cover (LID)
- 417: Support base
- 418: Holding structure (holding resin)
- 419: Housing (ceramic package)
- 512: Oscillation circuit
- 54: Temperature sensor
- 553: Detection circuit
- 555: ADC circuit
- 556: Serial IF
- 557: Adjustment circuit
- P1: Estimated value generation process
- X, X': Integrated angle error

## Claims

1. An inertia sensor configured by including at least a sensor element for sensing inertia, a signal processing circuit, and a memory, wherein memory data for estimating a characteristic of the inertia sensor is stored in the memory.

2. An inertia sensor configured by a sensor element for sensing inertia, and an LSI configured by including at least a signal processing circuit and a memory, wherein memory data for estimating a characteristic of the inertia sensor is stored in the memory.

3. The inertia sensor according to one of claim 1 and claim 2, wherein an operation error due to a sensor output change caused by a use environment change of the sensor is reduced on the basis of the memory data.

4. The inertia sensor according to one of claim 1 to claim 3, wherein a temperature sensor is included in the configuration of the inertia sensor, and the memory data is data about the temperature characteristic of the inertia sensor, the data being obtained on the basis of an output of the temperature sensor.

5. The inertia sensor according to claim 4, wherein the memory data represents coefficients of a straight line or a curve of a quadratic or higher order polynomial based on sensor output data including definition range data and value range data.

6. The inertia sensor according to claim 5, wherein the memory data represents a plurality of pieces of temperature data and sensor output data.

7. The inertia sensor according to one of claim 4 to claim 6, wherein the memory data is data acquired at the time of manufacture of the inertia sensor.

8. The inertia sensor according to one of claim 4 to claim 7, wherein the memory data is subjected to temperature correction.

9. The inertia sensor according to claim 8, wherein the temperature correction is expressed as a straight line or a curve of quadratic or higher order polynomial.

10. The inertia sensor according to one of claim 4 to claim 7, wherein the memory data is not subjected to temperature correction.

11. The inertia sensor according to one of claim 1 to claim 10, the inertia sensor being an angular velocity sensor.

12. The inertia sensor according to one of claim 1 to claim 10, the inertia sensor being an acceleration sensor.

13. A method for reducing an operation error of an inertia sensor, wherein a system using the inertia sensor according to one of claim 4 to claim 12 estimates a characteristic of the inertia sensor by reading the memory data from the inertia sensor, and reduces, on the basis of the estimated characteristic, an operation error due to a sensor output change caused by a use environment change.
